# EUROPEAN PATENT SPECIFICATION

(11) **EP 3 783 259 B1**
(45) Date of publication and mention of the grant of the patent: **06.04.2022**
(21) Application number: 20191895.0
(22) Date of filing: 20.08.2020
(51) Int. Cl.: F21S 43/20, F21S 43/14, F21S 43/15, F21S 43/31, F21S 43/40, B60Q 1/00, B60Q 1/26, G03H 1/00, B63B 32/50, B63H 1/36, G03H 1/22, G03H 1/30, B63H 16/18

(54) **ILLUMINATION DEVICE FOR A VEHICLE**
BELEUCHTUNGSVORRICHTUNG FÜR EIN FAHRZEUG
DISPOSITIF D'ÉCLAIRAGE POUR VÉHICULE

(30) Priority: 22.08.2019 ES 201930750
(43) Date of publication of application: 24.02.2021
(73) Proprietor: Seat, S.A., 08760 Martorell (ES)
(72) Inventor: PIQUÉ COSCONERA, Xavier, 08760 Martorell (ES); CORULL MASSANA, Ernest, 08760 Martorell (ES); MORON MORTE, Juan Carlos, 08760 Martorell (ES)
(74) Representative: Ponti & Partners, S.L.P

(56) References cited:
- EP-A2- 1 344 688
- WO-A1-2016/087642
- DE-A1-102013 008 197
- FR-A1- 3 025 286
- JP-A- H06 305 360
- JP-A- 2003 123 513
- JP-A- 2017 059 316
- KR-A- 20150 134 979
- US-A1- 2019 310 486

## Description

The present invention relates to an improved illumination device which is suitable to be installed in a motor vehicle, the function thereof being to generate at least one hologram function, wherein the illumination device has a housing, an outer cover which closes the housing, wherein the housing and the outer cover generate an inner cavity, and a unit for generating a hologram arranged in the inner cavity of the illumination device.

### Background of the invention

Holography was invented in 1948 by Hungarian physicist Dennis Gabor, and was disclosed in patent GB685286.

The use of LEDs to generate a three-dimensional hologram effect as an optical illusion is known. This effect consists of a base with LEDs and a holographic sheet, made of acrylic plastic, with shapes and drawings engraved with grooves and reliefs.

Currently, in the motor vehicle industry, the provision of a set of elements for generating a hologram in an illumination device, in addition to the usual illumination and signaling functions, is known.

In other words, rear lamps (also called pilots) for vehicles are known which incorporate devices capable of generating hologram images with different shapes and sizes by means of a group of LEDs and a holographic sheet.

For example, WO2017042345 describes an illumination device for vehicles, having a housing closed by a transparent covered pane and containing a hologram lamp unit having a light source unit and having an optical unit containing a hologram element for producing a hologram illumination area. This hologram generating system consists of a transparent pane, one or more light sources which emit light in an inclined direction, a holographic element in front of a support for producing a hologram light emitting surface in a plane parallel to the holographic sheet. However, the application conditions the design and geometry of the illumination device incorporating it, while not offering a satisfactory appearance when the light source unit is turned off. KR20150134979A discloses an illumination device for a vehicle with a unit for generating a hologram, wherein the hologram device with a light source is closed in a special housing which remains dark when the light source is not emitting light, and this housing is built in the vehicle body, behind an element of the vehicle body, to be hidden to the outside observer.

### Description of the invention

The object of the present invention is to provide an improved illumination device which is suitable to be installed in a motor vehicle, the main function thereof being to generate, in addition to the usual illumination and signaling functions, at least one hologram, which proposes an alternative design with respect to the illumination devices already known and has the advantages described below.

According to a first aspect, the present invention provides an improved illumination device for a motor vehicle, of the kind that will perform additional functions to the normal illumination functions of an illumination device so that a user can perceive the generated hologram on a surface of the illumination device, characterised in that the illumination device comprises:
- a housing,
- an outer cover which closes the housing, wherein the housing and the outer cover generate an inner cavity, and
- a unit for generating a hologram arranged in the inner cavity, wherein the unit for generating a hologram comprises:
- at least one first light emitter controllable between a first off state and a second on state;
- a holographic sheet comprising a hologram element arranged on the surface of the holographic sheet;
- a partially transparent dark film superimposed on the holographic sheet, the holographic sheet being arranged between the at least one first light emitter and the partially transparent dark film; and
- a reflective or partially reflective film arranged in a direction inclined with respect to the holographic sheet and configured to:
   a) reflect the partially transparent dark film towards the outer cover, the at least one first light emitter being in the first off state,
   b) generate a first illuminated holographic surface in the inner cavity, the at least one first light emitter being in the second on state, wherein the reflective or partially reflective film reflects the hologram element of the holographic sheet towards the outer cover.

Inside the inner cavity of the illumination device, in addition to the aforementioned elements, all the components necessary to perform the required illumination and signaling functions (for example, functions such as the stop function, the reverse function, the position light function, direction indicator lights, among others) can be housed.

In this specification, the term "illumination device" refers to any type of illumination device for a vehicle, for example a pilot light (also called a rear light). The terms "pilot light" or "rear light" are understood as the rear module responsible for generating different signaling functions, such as the stop function, the reverse function, the position light function, direction indicator lights, etc. However, this invention could also be perfectly applicable to a front headlight of a vehicle or to an inner illumination device of the vehicle.

In this specification, the term "hologram" refers to a lettering function or the like, said lettering formed by an image which may comprise, for example, patterns, letters and/or drawings. Therefore, the statement "generating an illuminated holographic surface in the inner cavity" means that an outside observer will be able to see said hologram in said inner cavity, through the outer cover, also known as a rear light cover or transparent plastic.

More specifically, the term hologram is understood as the generation of three-dimensional images on a reflective surface. Holography is a technique widely known in the state of the art. In the present invention, said technology is used with the aim of generating an image, a set of letters or a combination of both which generates for a viewer outside the vehicle the sensation that said image is suspended in the inner cavity of the illumination device, without elements holding or supporting it.

Advantageously, since the reflective or partially reflective film is arranged in an inclined direction with respect to the holographic sheet, both elements are separated by a certain distance, which provides notable advantages in terms of:
- a significant improvement in the accuracy of the hologram,
- no distortion of other functions which can be generated in the same space, and
- possibility of generating dynamic ON/OFF sequences.

Thus, since the reflective or partially reflective film is inclined, and the at least one first light emitter is turned off, an outside observer could see internal components of the illumination device, such as the holographic sheet itself, the at least one first light emitter or a printed circuit board, providing poor aesthetic quality. In order for these components to not be seen, the illumination device advantageously comprises the partially transparent dark film which is configured to achieve that if the at least one first light emitter is turned off, a black surface is reflected in the reflective or partially reflective film.

In reference to the partially transparent dark film, according to a possible embodiment of the invention, it comprises a smoked black finish. This component has the function that, if the one or more light sources are turned off, a black surface is reflected in the partially transparent film. This enables a better finish or design in case the one or more light sources are turned off. For example, if there is too much light on the outside of the illumination device or there are internal leaks in the illumination fixture from other illumination features, this film with a smoked black finish enables an outside observer to always see a black surface reflected in the partially reflective film. Thus, the partially transparent dark film enables the light beams emitted by the at least one first light emitter to pass through, while, when the at least one first light emitter is in the first off state, it has a slightly opaque finish.

Preferably, the holographic sheet has the function of creating a hologram light-emitting surface.

Preferably, the hologram element contains the image of the desired hologram engraved on the surface of the holographic sheet, and wherein said image of the hologram is a mask with zones which enable light to pass through and other zones which prevent light from passing through.

Preferably, the holographic sheet is separated at a distance from the at least one first light emitter.

In reference to the holographic sheet, it can be made of vinyl, such that it comprises zones which enable light to pass through and other zones which prevent light from passing through. In this manner, it is possible to generate the pattern/s, letter/s and/or drawing/s as desired.

Preferably, the partially transparent dark film is joined to the holographic sheet on the side opposite from the zone wherein the at least one first light emitter is located.

According to a possible embodiment of the invention, the reflective or partially reflective film is configured to reflect the light beams which pass through the image of the hologram element of the holographic sheet towards an outlet direction of the horizontal illumination device, i.e., towards the outer cover.

Preferably, the outer cover can be transparent or semi-transparent. The outer cover may, for example, be painted red, with the aim of the light passing through the outer cover adopting the optical parameters required by the specific illumination or signaling function to be performed.

In reference to the reflective or partially reflective film, the inclined direction is preferably about 45° with respect to the plane of the holographic sheet, although this angular arrangement can be comprised between 25° and 65°. The inclination of the reflective or partially reflective film depends on the angle of incidence of the light beams emitted by the at the least one first light emitter. The light reflected on the reflective or partially reflective film must be directed in a direction substantially perpendicular to the outer cover, in order to be properly visible by an observer outside of the vehicle.

Referring to the at least one first light emitter, it is preferably configured to emit a light beam in the vertical direction (i.e., a direction in a direction perpendicular to the plane of the holographic sheet), although it can also be done with angles not strictly perpendicular to the outlet direction of the first light emitter.

The at least one first light emitter can comprise a group of one or more light sources arranged separately from each other along the holographic sheet. Alternatively, the group of light sources can be arranged in the form of a matrix, such that each light emitter is configured to illuminate an area or section of the holographic sheet. The light source can be, for example, an LED or any other similar type.

In reference to the unit for generating a hologram, it preferably comprises dividing chambers arranged in alignment with each other, wherein each chamber comprises at least one first light emitter arranged therein, wherein each dividing chamber defines an outlet opening for the light generated by the at least one first light emitter, the holographic sheet being arranged between the outlet openings of the plurality of dividing chambers and the partially transparent dark film.

The fact of having these dividing chambers achieves linking a zone or section of the holographic sheet with each first light emitter. Thus, the hologram is delimited or divided into different zones, which provides advantages in terms of being able to sequentially turn on or turn off the generated hologram element.

Preferably, the dividing chambers are open only at the lower ends thereof, which generates a homogeneous distribution of light and enables the cone of light generated by the light sources to open in all directions.

Preferably, the dividing chambers are parallel, and the light sources are configured to emit a light beam in the same emission direction.

Preferably, the inner walls of the plurality of dividing chambers are white, which improves the homogeneity of the outgoing light and prevents light from being lost.

In the event that the illumination device has dividing chambers, there will be at least one dividing wall with at least two light sources, one on each side of the dividing wall.

In the event that the illumination device has dividing chambers, the unit for generating a hologram may further comprise a power control unit for the selective, or independent, turning on and off of each of the at least one first light emitter, such that the light sources can be controlled independently, and wherein the control unit is configured to selectively turn on or off (e.g., sequentially) the illuminated holographic surface generated in the inner cavity.

This power control unit may comprise a printed circuit board, which has a controller that sequentially turns on the light sources. The control unit may also comprise a controller with a timer, thus being able to generate the sequential effect of turning on or off.

According to a possible embodiment of the invention, the unit for generating a hologram can further comprise a diffuser arranged between the at least one first light emitter and the holographic sheet.

The presence of this diffuser achieves high homogeneity, such that the light that crosses through the diffuser does not comprise zones with high intensity (light spots) and zones with low intensity.

Preferably, the partially transparent dark film is joined to the holographic sheet by means of adhesive, welding, or overmoulding. It is not essential for the invention that they be joined, although it is an advantageous feature since no light diffraction is produced.

According to a second embodiment of the invention, the illumination device for a vehicle further comprises at least one second light emitter controllable between a first off state and a second on state and configured to emit light beams towards a rear face of the reflective or partially reflective film, wherein the reflective or partially reflective film has a reflection coefficient of between 30 % and 70 %, such that the light beams emitted by the at least one second light emitter pass through the partially reflective film generating a second illumination function in the same area of the outer cover.

Advantageously, in this second embodiment of the invention, it is possible to take advantage of the same space for the generation of a second illumination or signaling function.

In this second embodiment of the invention, the reflective or partially reflective film can only be partially reflective and preferably with a reflection coefficient of around 30 to 70 %, and more preferably 50 %.

In this second embodiment of the invention, the illumination device for a vehicle may, optionally, further comprise a rear reflective surface arranged between the second light emitter and the partially reflective film, wherein the reflective surface is configured to reflect the light beams generated by the at least one second light emitter towards the rear surface of the partially reflective film, thus improving the package or volume occupied by the illumination device.

This rear reflective surface preferably has at least one curved parabola-shaped segment, such that the light beams emitted by the second light emitter are reflected on the rear reflective surface and partially cross through the partially reflective film in a horizontal direction.

Alternatively, this rear reflective surface may not exist, such that the light beams emitted by the second light emitter are directed directly (without being reflected on any other element), partially crossing through the partially reflective film in a horizontal direction.

In this second embodiment of the invention, preferably the at least one second light emitter has a light emission intensity higher than that of the at least one first light emitter. This advantageously makes it possible for the first aesthetic function generated by the first light emitter to not be seen.

The objective of said second embodiment shown is to generate, in one same zone or area of the outer cover, two different functions. A first function consists of the generation of the hologram element and a second function can be a stop signal, an activation signal of the direction indicator light, or any other. Thus, when the at least one first light emitter is in a second on state and the at least one second light emitter is in a first off state, an outside observer will perceive the generated hologram. When the at least one first light emitter is in a first off state and the at least one second light emitter is in a second on state, an outside observer will perceive the second exposed sizgnalling function. When the at least one first light emitter is in a first off state and the at least one second light emitter is in a first off state, an outside observer will perceive a substantially dark or black inner cavity of the illumination device.

In a third embodiment of the invention, the illumination device for a vehicle of the first embodiment further comprises a second unit for generating a hologram arranged in the inner cavity, wherein the second unit for generating a hologram comprises:
- at least one third light emitter controllable between a first off state and a second on state, and configured to emit light beams towards a rear surface of the reflective or partially reflective film,
- a second holographic sheet comprising a third hologram element arranged on the surface of the second holographic sheet, wherein the second holographic sheet is arranged between the at least one second light emitter and the rear surface of the reflective or partially reflective film, and wherein the second holographic sheet is arranged in a direction inclined with respect to the reflective or partially reflective film; and
   wherein the reflective or partially reflective film comprises a reflection coefficient of between 30 and 70 %, such that it is configured to:
   c) generate an illuminated holographic surface in the inner cavity, the at least one first light emitter being in the second on state and the at least one third light emitter being in the first off state,
   d) generate a second illuminated holographic surface in the inner cavity, the at least one third light emitter being in the second on state and the at least one first light emitter being in the first off state.

The advantages of this third embodiment of the invention are as follows:
1) On an aesthetic level, the second holographic sheet generates another different illuminated surface/area (instead of a completely illuminated red area as explained in the second embodiment) in one same area of the outer housing. Therefore, a dual hologram function is generated in one same area of the outer cover.
2) Furthermore, it gives a feeling of depth of the generated lettering thanks to the hologram when the third group of light sources emits with a light intensity lower than that of the first group of light sources. Furthermore, said feeling of depth of the hologram is produced from different positions/angles wherein the outside observer is located.
3) Finally, the light sources and components which participate in generating the two hologram functions are hidden. Thus, when the first and third light sources are turned off, the light sources or other elements which participate in the generation of said functions are not seen, improving the perception of design.

In this third embodiment of the invention, the provision of a partially transparent dark film is not strictly necessary. However, in this third embodiment of the invention the second unit for generating a hologram may additionally comprise a second partially transparent dark film superimposed on the second holographic sheet, the second holographic sheet being arranged between the at least one third light emitter and the partially transparent dark film. In this manner, it is achieved that when the first light emitter is in off mode and the third light emitter is also in off mode, the partially reflective film reflects the black surface of the first partially transparent dark film and, at the same time, the partially reflective film enables the black surface of the second partially transparent dark film to be seen (since the film is semi-transparent or semi-reflective).

### Brief description of the figures

To better understand what has been set forth, several drawings are attached wherein different practical embodiments of the invention are schematically depicted merely by way of non-limiting example.
Figure 1 schematically represents a front view of a pilot light wherein a first function for generating the hologram with a holographic lettering with the letters "FR" is shown.
Figure 2 schematically represents the same front view of a pilot light as Figure 1, but in this case a second function for generating "STOP" in the same space is shown.
Figure 3 schematically represents in a cross section, according to the lines A-A' of Figure 2, the main structure of the first embodiment of the illumination device of the present invention, as well as a detail view.
Figure 4 schematically represents in a cross section, according to the lines A-A' of Figure 2, the main structure of the second embodiment of the illumination device of the present invention.
Figure 5 schematically represents in a cross section, according to the lines A-A' of Figure 2, the main structure of the third embodiment of the illumination device of the present invention.

### Description of exemplary embodiments

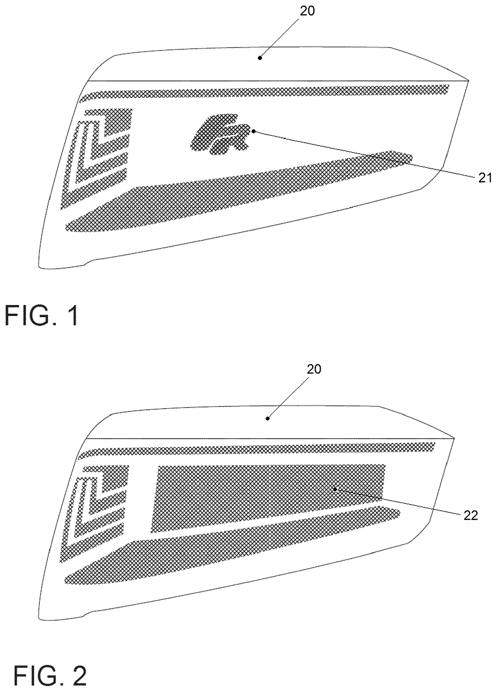

Exemplary embodiments of the present invention are described below referring to Figures 1 to 5.

As shown in Figure 1, a possible configuration of a pilot light incorporates the option of a first function for generating the hologram with a holographic lettering with the letters "FR" (21) which is seen by a user outside of the vehicle, perceiving a three-dimensional or floating hologram element within the inner cavity of the illumination device; and it also incorporates the option of a second function for generating "STOP" (22) (that is, a red light) in the same space (wherein this second function is illustrated in Figure 2) which a user outside of the pilot light sees.

Figures 1 and 2 show the area or section of an outer cover (2) wherein the hologram is generated and the second illumination function is substantially the same. Additionally, other functions can be generated in the periphery of the mentioned area.

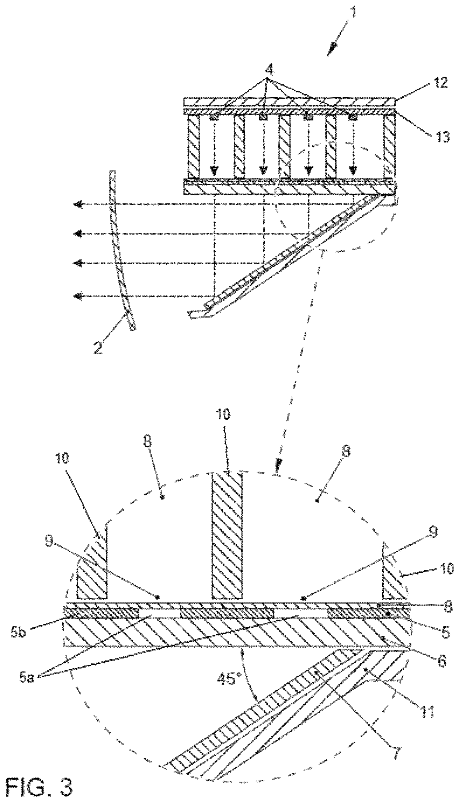

This generation of the hologram is performed by means of a first embodiment of the structure (1) of the present invention shown in Figure 3 and specifically in the detail view thereof, comprising as main elements:
- a housing (20) (not shown in Figures 3 to 5),
- an outer cover (2) which closes the housing (20), wherein the housing (20) and the outer cover (2) generate an inner cavity, and
- a unit for generating a hologram (3) arranged in the inner cavity, wherein the unit for generating a hologram (3) comprises:
   - light sources (4) controllable between a first off state and a second on state, wherein the light sources (4) emit light in a substantially vertical direction;
   - a holographic sheet (5) comprising a hologram element arranged on the surface of the holographic sheet (5), wherein the light beams generated by the light sources (4) cross through the holographic sheet (5);
   - a partially transparent dark film (6) superimposed on the holographic sheet (5), the holographic sheet (5) being arranged between the at least one light emitter (4) and the partially transparent dark film (6), wherein the light beams generated by the light sources (4) additionally cross through the partially transparent dark film (6); and
   - a reflective or partially reflective film (7) arranged in a direction inclined with respect to the holographic sheet (5) and configured to:
      a) reflect the partially transparent dark film (6) towards the outer cover (2), the at least one light emitter being in the first off state,
      b) generate an illuminated holographic surface in the inner cavity, the light sources (4) being in the second on state, wherein the reflective or partially reflective film (7) reflects the hologram element of the holographic sheet (5) towards the outer cover (2).

The detail view of Figure 3 also shows the option of incorporating a diffuser (8) arranged between the light sources (4) and the holographic sheet (5). It shows how the diffuser (8), the holographic sheet (5) and the partially transparent dark film (6) are in contact with each other, preventing diffractions due to the inlet into the "air" medium when the light beams cross through said components.

Figure 3 also shows the option of incorporating dividing chambers (8) arranged aligned with each other, in this case four chambers, separated from each other by respective walls (10). Each dividing chamber (8) comprises therein at least one light source (4), and wherein each dividing chamber (8) defines a lower outlet opening (9) for the generated light. Said dividing chambers (8) are substantially elongated with the aim of achieving high homogeneity by internal reflection of the light beams on the inner faces of said dividing chambers (8). In this case, the holographic sheet (5) is arranged between the outlet openings of the plurality of dividing chambers (8) and the partially transparent dark film (6). Specifically, the holographic sheet (5) is arranged closing the outlet openings of the dividing chambers (8).

Figure 3 also shows the option of incorporating an opaque surface (11) behind the reflective or partially reflective film (7), preventing the loss of light towards the rear zone of the reflective or partially reflective film (7).

Figure 3 also shows the option of incorporating another opaque surface (12) behind the light sources (4). The light sources (4) can be secured in position on a support (13), or on one same printed circuit board.

Figure 3 shows how the holographic sheet (5) has alternating zones, wherein some zones (5a) enable the light beams generated by the light sources (4) to pass through and other zones (5b) prevent the light beams from passing through, wherein the zones with light passing through (5a) are intercalated with the opaque zones (5b).

This Figure 3 shows how the reflective or partially reflective film (7) is arranged in an angular arrangement of 45° with respect to the plane of the holographic sheet (5).

Figure 3 also shows how in this specific case the four light sources (4) emit respective light beams (represented by dotted lines) in a direction perpendicular to the plane of the holographic sheet (5). In greater detail, when the first light emitters (4) are in a second on state, the light beams emitted cross through the diffuser (8), the holographic sheet (5) and the partially transparent dark film (6). Subsequently, the light beams are reflected on the reflective or partially reflective film (7), being directed substantially towards the outer cover (2) in the horizontal direction.

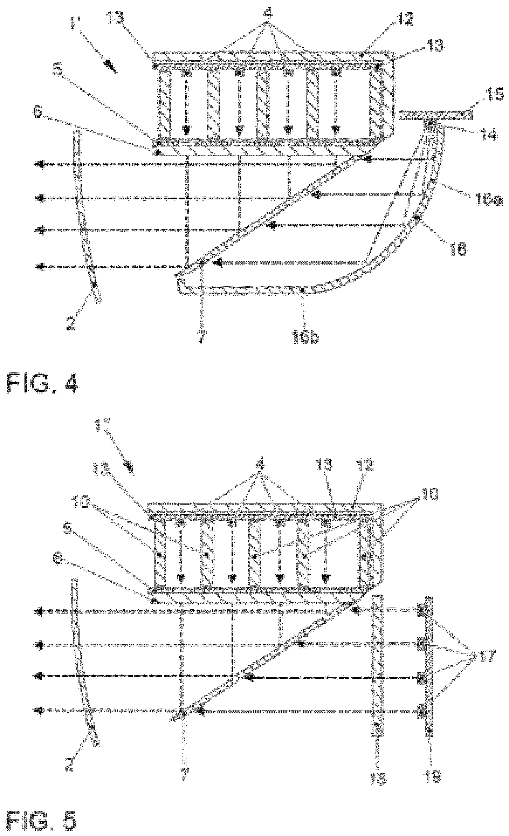

As seen in Figure 4, the second embodiment of the present invention concerns an illumination device (1') for a vehicle, comprising, apart from the main elements of the first embodiment of Figure 3, at least one second light emitter formed by one or more light sources (14) controllable between a first off state and a second on state.

In this case, a single light source (14) has been arranged, which is configured to emit second light beams towards the inclined partially reflective film (7), which in this second embodiment necessarily has a reflection coefficient of between 30 and 70 %. Thus, the second light beams (represented by dotted lines longer than the first light beams from the sources 4) emitted by the second light source (14) also cross through the partially reflective film (7) and, in this case, they generate a second illumination function in the same area/surface of the outer cover (2). As in the first embodiment, the second light sources (14) can be secured in position on a support (15).

This second embodiment in Figure 4 also shows a rear reflective surface (16) arranged between the second light source (14) and the partially reflective film (7), wherein the rear reflective surface (16) is configured to reflect the light beams generated by the second light sources (14) towards the rear face of the partially reflective film (7).

As seen in Figure 4, this rear reflective surface (16) has a curved parabola-shaped upper segment (16a) and a substantially horizontal lower segment (16b). Said parabola-shaped configuration enables the second outgoing light beams to be directed from the second light source (14) to a substantially horizontal insertion direction into the partially reflective film (7).

By way of explanation, when the first light emitters (4) are in the second on state and the second light sources (14) are in the first off state, an outside observer sees a floating hologram such as the one shown in Figure 1. Alternatively, when the first light emitters (4) are in the first off state and the second light sources (14) are in the second on state, an outside observer sees a second illumination function such as the one shown in Figure 2. Alternatively, when the first light emitters (4) are in the second on state and the second light sources (14) are in the second on state, the second light sources (14) emitting with an emission intensity greater than of the first light emitters (4), an outside observer sees a second illumination function such as the one shown in Figure 2.

As seen in Figure 5, the third embodiment of the present invention concerns an illumination device (1") for a vehicle, comprising, apart from the main elements of the first embodiment of Figure 1, a second unit for generating a second hologram arranged in the inner cavity, wherein the second unit for generating a second hologram comprises, in turn, the following elements:
- at least one third light emitter, in this case four light sources (17) separated from each other, controllable between a first off state and a second on state, and configured to emit light beams towards the rear face of the reflective or partially reflective film (7),
- a second holographic sheet (18) comprising a second hologram element arranged on the surface of the second holographic sheet (18), wherein the second holographic sheet (18) is arranged between the at least one second light emitter (17) and the rear face of the reflective or partially reflective film (7), and wherein the second holographic sheet (18) is arranged in a vertical direction; and
   - wherein the partially reflective film (7) comprises a reflection coefficient of between 30 and 70 %.

With this particular and advantageous configuration of Figure 5, further being configured to:
a) reflect the partially transparent dark film (6) towards the outer cover (2), the at least one first light emitter (4) being in the first off state, and
b) generate a first illuminated holographic surface in the inner cavity, the at least the first light emitter (4) being in the second on state and the at least one third light emitter (17) being in the first off state, wherein the partially reflective film (7) reflects the hologram element of the holographic sheet towards the outer cover (2),
also:
d) additionally generate a second illuminated holographic surface in the inner cavity, the at least one third light emitter (17) being in the second on state and the at least one first light emitter (4) being in the first off state.
e) generate a holographic element in the inner cavity resulting from a combination of the first illuminated holographic surface and the second illuminated holographic surface, the at least one third light emitter (17) being in the second on state and the at least one first light emitter (4) being in the second on state.

## Claims

1. An illumination device (1, 1', 1") for a vehicle, comprising:
- a housing (20),
- an outer cover (2) which closes the housing, wherein the housing and the outer cover generate an inner cavity, and
- a unit for generating a hologram arranged in the inner cavity, wherein the unit for generating a hologram comprises:
- at least one first light emitter (4) controllable between a first off state and a second on state;
- a holographic sheet (5) comprising a hologram element arranged on the surface of the holographic sheet (5);
- a partially transparent dark film (6) superimposed on the holographic sheet (5), the holographic sheet (5) being arranged between the at least one first light emitter (4) and the partially transparent dark film (6); and
- a reflective or partially reflective film (7) arranged in a direction inclined with respect to the holographic sheet (5) and configured to:
a) reflect the partially transparent dark film (6) towards the outer cover (2), the at least one first light emitter (4) being in the first off state, and
b) generate a first illuminated holographic surface in the inner cavity, the at least one first light emitter (4) being in the second on state, wherein the reflective or partially reflective film (7) reflects the hologram element of the holographic sheet (5) towards the outer cover (2).

2. The illumination device (1, 1', 1") for a vehicle according to claim 1, wherein the reflective or partially reflective film (7) is inclined in an angular arrangement of 45° with respect to the surface plane of the holographic sheet (5).

3. The illumination device (1, 1', 1") for a vehicle according to any one of the preceding claims, wherein the at least one light emitter (4) emits light beams in a direction perpendicular to the surface plane of the holographic sheet (5).

4. The illumination device (1, 1', 1") for a vehicle according to any one of the preceding claims, wherein the unit for generating a hologram comprises dividing chambers (8) arranged aligned with each other, wherein each dividing chamber (8) comprises at least one first light emitter (4) arranged therein, and wherein each dividing chamber (8) defines an outlet opening (9) for the light beams generated by the first light emitters (4), the holographic sheet (5) being arranged between the outlet openings of the plurality of dividing chambers and the partially transparent dark film (6).

5. The illumination device (1, 1', 1") for a vehicle according to claim 4, wherein the inner walls (10) of the plurality of dividing chambers (8) are white.

6. The illumination device (1, 1', 1") for a vehicle according to claim 4 or 5, wherein the unit for generating a hologram further comprises a power control unit for the selective turning on and off of each of the first light sources (4), wherein the first light sources (4) can be controlled independently by the control unit, and wherein the control unit is configured to generate a selective turning on or off of the first illuminated holographic surface generated in the inner cavity.

7. The illumination device (1, 1', 1") for a vehicle according to any one of the preceding claims, wherein the unit for generating a hologram further comprises a diffuser (8) arranged between the at least one light emitter (4) and the holographic sheet (5).

8. The illumination device (1, 1', 1") for a vehicle according to any one of the preceding claims, wherein the holographic sheet (5) is made of vinyl such that it comprises some zones (5a) which enable light to pass through and other zones (5b) which prevent light from passing through.

9. The illumination device (1, 1', 1") for a vehicle according to any one of the preceding claims, wherein the partially transparent dark film (6) comprises a smoked black finish.

10. The illumination device (1') for a vehicle according to any one of the preceding claims, further comprising at least one second light emitter (14) controllable between a first off state and a second on state and configured to emit light beams towards a rear face of the reflective or partially reflective film (7), wherein in this case the reflective or partially reflective film (7) has a reflection coefficient of between 30 % and 70 %, such that the light beams emitted by the at least one second light emitter (14) cross through the partially reflective film (7) generating a second illumination function in the same area of the outer cover (2).

11. The illumination device (1') for a vehicle according to claim 10, further comprising a rear reflective surface (16) arranged between the at least one second light emitter (14) and the partially reflective film (7), wherein the rear reflective surface (16) is configured to reflect the light beams generated by the at least one second light emitter (14) towards the rear face of the partially reflective film (7).

12. The illumination device (1') for a vehicle according to claim 11, wherein the rear reflective surface (16) has at least one curved parabola-shaped segment (16a).

13. The illumination device (1') for a vehicle according to any one of claims 10 to 12, wherein the at least one second light emitter (14) has a light emission intensity higher than that of the at least one first light emitter (4).

14. The illumination device (1") for a vehicle according to any one of claims 1 to 9, comprising a second unit for generating a hologram arranged in the inner cavity, wherein the second unit for generating a hologram comprises:
- at least one third light emitter (17) controllable between a first off state and a second on state, and configured to emit light beams towards a rear face of the reflective or partially reflective film (7),
- a second holographic sheet (18) comprising a second hologram element arranged on the surface of the second holographic sheet (18), wherein the second holographic sheet (18) is arranged between the at least one third light emitter (17) and the rear face of the reflective or partially reflective film (7), and wherein the second holographic sheet (18) is arranged in a direction inclined with respect to the reflective or partially reflective film (7); and
wherein the reflective or partially reflective film (7) has a reflection coefficient of between 30 % and 70 %, such that it is configured to:
c) generate a first illuminated holographic surface in the inner cavity, the at least one first light emitter (4) being in the second on state and the at least one third light emitter (17) being in the first off state, and
d) generate a second illuminated holographic surface in the inner cavity, the at least one third light emitter (17) being in the second on state and the at least one first light emitter (4) being in the first off state.

15. The illumination device (1") for a vehicle according to claim 14, wherein the second unit for generating a hologram further comprises a second partially transparent dark film superimposed on the second holographic sheet (18), the second holographic sheet (18) being arranged between the at least one third light emitter (17) and the partially transparent dark film.

## Patentansprüche

1. Beleuchtungsvorrichtung (1, 1', 1") für ein Fahrzeug, umfassend:
- ein Gehäuse (20),
- eine äußere Abdeckung (2), die das Gehäuse verschließt, wobei das Gehäuse und die äußere Abdeckung einen Innenhohlraum bilden, und
- eine Einheit zum Erzeugen eines Hologramms, die im Innenhohlraum angeordnet ist, wobei die Einheit zum Erzeugen eines Hologramms umfasst:
- mindestens einen ersten Lichtsender (4), der zwischen einem ersten Aus-Zustand und einem zweiten Ein-Zustand gesteuert werden kann;
- eine holografische Folie (5), die ein Hologrammelement umfasst, das auf der Oberfläche der holografischen Folie (5) angeordnet ist;
- einen teilweise transparenten dunklen Film (6), der auf die holografische Folie (5) aufgelegt ist, wobei die holografische Folie (5) zwischen dem mindestens einen ersten Lichtsender (4) und dem teilweise transparenten dunklen Film (6) angeordnet ist; und
- einen reflektierenden oder teilweise reflektierenden Film (7), der in einer Richtung angeordnet ist, die in Bezug auf die holografische Folie (5) geneigt ist, und ausgelegt ist zum:
a) Reflektieren des teilweise transparenten dunklen Films (6) zur äußeren Abdeckung (2), wobei der mindestens eine erste Lichtsender (4) im ersten Aus-Zustand ist, und
b) Erzeugen einer ersten beleuchteten holografischen Oberfläche im Innenhohlraum, wobei der mindestens eine erste Lichtsender (4) im zweiten Ein-Zustand ist, wobei der reflektierende oder teilweise reflektierende Film (7) das Hologrammelement der holografischen Folie (5) zur äußeren Abdeckung (2) reflektiert.

2. Beleuchtungsvorrichtung (1, 1', 1") für ein Fahrzeug nach Anspruch 1, wobei der reflektierende oder teilweise reflektierende Film (7) in einer Winkelanordnung von 45° in Bezug auf die Oberflächenebene der holografischen Folie (5) geneigt ist.

3. Beleuchtungsvorrichtung (1, 1', 1") für ein Fahrzeug nach einem der vorhergehenden Ansprüche, wobei der mindestens eine Lichtsender (4) Lichtstrahlen in einer Richtung senkrecht zur Oberflächenebene der holografischen Folie (5) emittiert.

4. Beleuchtungsvorrichtung (1, 1', 1") für ein Fahrzeug nach einem der vorhergehenden Ansprüche, wobei die Einheit zum Erzeugen eines Hologramms Unterteilungskammern (8) umfasst, die miteinander ausgerichtet sind, wobei jede Unterteilungskammer (8) mindestens einen ersten Lichtsender (4) darin angeordnet umfasst, und wobei jede Unterteilungskammer (8) eine Auslassöffnung (9) für die von den ersten Lichtsendern (4) erzeugten Lichtstrahlen definiert, wobei die holografische Folie (5) zwischen den Auslassöffnungen der Mehrzahl von Unterteilungskammern und dem teilweise transparenten dunklen Film (6) angeordnet ist.

5. Beleuchtungsvorrichtung (1, 1', 1") für ein Fahrzeug nach Anspruch 4, wobei die Innenwände (10) der Mehrzahl von Unterteilungskammern (8) weiß sind.

6. Beleuchtungsvorrichtung (1, 1', 1") für ein Fahrzeug nach Anspruch 4 oder 5, wobei die Einheit zum Erzeugen eines Hologramms ferner eine Leistungssteuereinheit zum selektiven Ein- und Ausschalten einer jeden der ersten Lichtquellen (4) umfasst, wobei die ersten Lichtquellen (4) durch die Steuereinheit unabhängig gesteuert werden können, und wobei die Steuereinheit so ausgelegt ist, dass sie ein selektives Ein- oder Ausschalten der ersten beleuchteten holografischen Oberfläche erzeugt, die im Innenhohlraum erzeugt wird.

7. Beleuchtungsvorrichtung (1, 1', 1") für ein Fahrzeug nach einem der vorhergehenden Ansprüche, wobei die Einheit zum Erzeugen eines Hologramms ferner einen Diffusor (8) umfasst, der zwischen dem mindestens einen Lichtsender (4) und der holografischen Folie (5) angeordnet ist.

8. Beleuchtungsvorrichtung (1, 1', 1") für ein Fahrzeug nach einem der vorhergehenden Ansprüche, wobei die holografische Folie (5) aus Vinyl hergestellt ist, derart dass sie einige Zonen (5a), die Licht durchtreten lassen, und andere Zonen (5b) umfasst, die verhindern, dass Licht durchtritt.

9. Beleuchtungsvorrichtung (1, 1', 1") für ein Fahrzeug nach einem der vorhergehenden Ansprüche, wobei der teilweise transparente dunkle Film (6) ein getöntes schwarzes Finish umfasst.

10. Beleuchtungsvorrichtung (1') für ein Fahrzeug nach einem der vorhergehenden Ansprüche, ferner umfassend mindestens einen zweiten Lichtsender (14), der zwischen einem ersten Aus-Zustand und einem zweiten Ein-Zustand gesteuert werden kann und zum Emittieren von Lichtstrahlen zu einer Rückseite des reflektierenden oder teilweise reflektierenden Films (7) ausgelegt ist, wobei in diesem Fall der reflektierende oder teilweise reflektierende Film (7) einen Reflexionskoeffizienten von 30 % bis 70 % aufweist, derart dass die von dem mindestens einen zweiten Lichtsender emittierten Lichtstrahlen (14) durch den teilweisen reflektierenden Film (7) durchtreten und eine zweite Beleuchtungsfunktion im gleichen Bereich der äußeren Abdeckung (2) erzeugen.

11. Beleuchtungsvorrichtung (1') für ein Fahrzeug nach Anspruch 10, ferner umfassend eine reflektierende Rückfläche (16), die zwischen dem mindestens einen zweiten Lichtsender (14) und dem teilweise reflektierenden Film (7) angeordnet ist, wobei die reflektierende Rückfläche (16) zum Reflektieren der von dem mindestens einen zweiten Lichtsender (14) erzeugten Lichtstrahlen zur Rückseite des teilweise reflektierenden Films (7) ausgelegt ist.

12. Beleuchtungsvorrichtung (1') für ein Fahrzeug nach Anspruch 11, wobei die reflektierende Rückfläche (16) mindestens ein gekrümmtes parabelförmiges Segment (16a) aufweist.

13. Beleuchtungsvorrichtung (1') für ein Fahrzeug nach einem der Ansprüche 10 bis 12, wobei der mindestens eine zweite Lichtsender (14) eine Lichtemissionsstärke aufweist, die höher als die des mindestens einen ersten Lichtsenders (4) ist.

14. Beleuchtungsvorrichtung (1") für ein Fahrzeug nach einem der Ansprüche 1 bis 9, umfassend eine zweite Einheit zum Erzeugen eines Hologramms, die im Innenhohlraum angeordnet ist, wobei die zweite Einheit zum Erzeugen eines Hologramms umfasst:
- mindestens einen dritten Lichtsender (17), der zwischen einem ersten Aus-Zustand und einem zweiten Ein-Zustand gesteuert werden kann und zum Emittieren von Lichtstrahlen zu einer Rückseite des reflektierenden oder teilweise reflektierenden Films (7) ausgelegt ist,
- eine zweite holografische Folie (18), die ein zweites Hologrammelement umfasst, das auf der Oberfläche der zweiten holografischen Folie (18) angeordnet ist, wobei die zweite holografische Folie (18) zwischen dem mindestens einen dritten Lichtsender (17) und der Rückseite des reflektierenden oder teilweise reflektierenden Films (7) angeordnet ist, und wobei die zweite holografische Folie (18) in einer Richtung angeordnet ist, die in Bezug auf den reflektierenden oder teilweise reflektierenden Film (7) geneigt ist; und
wobei der reflektierende oder teilweise reflektierende Film (7) einen Reflexionskoeffizienten von 30 % bis 70 % aufweist, derart dass er ausgelegt ist zum:
c) Erzeugen einer ersten beleuchteten holografischen Oberfläche im Innenhohlraum, wobei der mindestens eine erste Lichtsender (4) im zweiten Ein-Zustand ist, und der mindestens eine dritte Lichtsender (17) im ersten Aus-Zustand ist, und
d) Erzeugen einer zweiten beleuchteten holografischen Oberfläche im Innenhohlraum, wobei der mindestens eine dritte Lichtsender (17) im zweiten Ein-Zustand ist, und der mindestens eine zweite Lichtsender (4) im ersten Aus-Zustand ist.

15. Beleuchtungsvorrichtung (1") für ein Fahrzeug nach Anspruch 14, wobei die zweite Einheit zum Erzeugen eines Hologramms ferner einen zweiten teilweise transparenten dunklen Film umfasst, der auf die zweite holografische Folie (18) aufgelegt ist, wobei die zweite holografische Folie (18) zwischen dem mindestens einen dritten Lichtsender (17) und dem teilweise transparenten dunklen Film angeordnet ist.

## Revendications

1. Dispositif d'éclairage (1, 1', 1") pour un véhicule, comprenant :
un boîtier (20),
un couvercle externe (2) qui ferme le boîtier, dans lequel le boîtier et le couvercle externe génèrent une cavité interne, et
une unité pour générer un hologramme agencé dans la cavité interne, dans lequel l'unité pour générer un hologramme comprend :
au moins un premier émetteur de lumière (4) pouvant être commandé entre un premier état désactivé et un second état activé ;
une feuille holographique (5) comprenant un élément d'hologramme agencé sur la surface de la feuille holographique (5) ;
un film sombre partiellement transparent (6) superposé sur la feuille holographique (5), la feuille holographique (5) étant agencée entre le au moins un premier émetteur de lumière (4) et le film sombre partiellement transparent (6) ; et
un film réfléchissant ou partiellement réfléchissant (7) agencé dans une direction inclinée par rapport à la feuille holographique (5) et configuré pour :
a) refléter le film sombre partiellement transparent (6) vers le couvercle externe (2), le au moins un premier émetteur de lumière (4) étant dans le premier état désactivé, et
b) générer une première surface holographique éclairée dans la cavité interne, le au moins un premier émetteur de lumière (4) étant dans le second état activé, dans lequel le film réfléchissant ou partiellement réfléchissant (7) reflète l'élément d'hologramme de la feuille holographique (5) vers le couvercle externe (2).

2. Dispositif d'éclairage (1, 1', 1") pour un véhicule selon la revendication 1, dans lequel le film réfléchissant ou partiellement réfléchissant (7) est incliné dans une disposition angulaire de 45° par rapport au plan de surface de la feuille holographique (5).

3. Dispositif d'éclairage (1, 1', 1") pour un véhicule selon l'une quelconque des revendications précédentes, dans lequel le au moins un émetteur de lumière (4) émet des faisceaux lumineux dans une direction perpendiculaire au plan de surface de la feuille holographique (5).

4. Dispositif d'éclairage (1, 1', 1") pour un véhicule selon l'une quelconque des revendications précédentes, dans lequel l'unité pour générer un hologramme comprend des chambres de division (8) agencées en alignement les unes par rapport aux autres, dans lequel chaque chambre de division (8) comprend au moins un premier émetteur de lumière (4) agencé à l'intérieur de cette dernière, et dans lequel chaque chambre de division (8) définit une ouverture de sortie (9) pour les faisceaux lumineux générés par les premiers émetteurs de lumière (4), la feuille holographique (5) étant agencée entre les ouvertures de sortie de la pluralité de chambres de division et le film sombre partiellement transparent (6).

5. Dispositif d'éclairage (1, 1', 1") pour un véhicule selon la revendication 4, dans lequel les parois internes (10) de la pluralité de chambres de division (8) sont blanches.

6. Dispositif d'éclairage (1, 1', 1") pour un véhicule selon la revendication 4 ou 5, dans lequel l'unité pour générer un hologramme comprend en outre une unité de commande de puissance pour l'activation et la désactivation sélective de chacune des premières sources de lumière (4), dans lequel les premières sources de lumière (4) peuvent être commandées indépendamment par l'unité de commande, et dans lequel l'unité de commande est configurée pour générer une activation ou une désactivation sélective de la première surface holographique éclairée générée dans la cavité interne.

7. Dispositif d'éclairage (1, 1', 1") pour un véhicule selon l'une quelconque des revendications précédentes, dans lequel l'unité pour générer un hologramme comprend en outre un diffuseur (8) agencé entre le au moins un émetteur de lumière (4) et la feuille holographique (5).

8. Dispositif d'éclairage (1, 1', 1") pour un véhicule selon l'une quelconque des revendications précédentes, dans lequel la feuille holographique (5) est réalisée à partir de vinyle de sorte qu'elle comprend certaines zones (5a) qui permettent le passage de la lumière et d'autres zones (5b) qui empêchent le passage de la lumière.

9. Dispositif d'éclairage (1, 1', 1") pour un véhicule selon l'une quelconque des revendications précédentes, dans lequel le film sombre partiellement transparent (6) comprend un fini noir fumé.

10. Dispositif d'éclairage (1') pour un véhicule selon l'une quelconque des revendications précédentes, comprenant en outre au moins un deuxième émetteur de lumière (14) contrôlable entre un premier état désactivé et un second état activé et configuré pour émettre des faisceaux lumineux vers une face arrière du film réfléchissant ou partiellement réfléchissant (7), dans lequel, dans ce cas, le film réfléchissant ou partiellement réfléchissant (7) a un coefficient de réflexion compris entre 30% et 70%, de sorte que les faisceaux lumineux émis par le au moins un deuxième émetteur de lumière (14) traversent le film partiellement réfléchissant (7) générant une seconde fonction d'éclairage dans la même zone du couvercle externe (2).

11. Dispositif d'éclairage (1') pour un véhicule selon la revendication 10, comprenant en outre une surface réfléchissante arrière (16) agencée entre le au moins un deuxième émetteur de lumière (14) et le film partiellement réfléchissant (7), dans lequel la surface réfléchissante arrière (16) est configurée pour refléter les faisceaux lumineux générés par le au moins un deuxième émetteur de lumière (14) vers la face arrière du film partiellement réfléchissant (7).

12. Dispositif d'éclairage (1') pour un véhicule selon la revendication 11, dans lequel la surface réfléchissante arrière (16) a au moins un segment incurvé en forme de parabole (16a).

13. Dispositif d'éclairage (1') pour un véhicule selon l'une quelconque des revendication 10 à 12, dans lequel le au moins un deuxième émetteur (14) a une intensité d'émission de lumière supérieure à celle du au moins un premier émetteur de lumière (4).

14. Dispositif d'éclairage (1") pour un véhicule selon l'une quelconque des revendications 1 à 9, comprenant une seconde unité pour générer un hologramme agencé dans la cavité interne, dans lequel la seconde unité pour générer un hologramme comprend :
au moins un troisième émetteur de lumière (17) pouvant être commandé entre un premier état désactivé et un second état activé, et configuré pour émettre des faisceaux lumineux vers une face arrière du film réfléchissant ou partiellement réfléchissant (7),
une seconde feuille holographique (18) comprenant un second élément d'hologramme agencé sur la surface de la seconde feuille holographique (18), dans lequel la seconde feuille holographique (18) est agencée entre le au moins un troisième émetteur de lumière (17) et la face arrière du film réfléchissant ou partiellement réfléchissant (7), et dans lequel la seconde feuille holographique (18) est agencée dans une direction inclinée par rapport au film réfléchissant ou partiellement réfléchissant (7) ; et
dans lequel le film réfléchissant ou partiellement réfléchissant (7) a un coefficient de réflexion compris entre 30% et 70%, de sorte qu'il est configuré pour :
c) générer une première surface holographique éclairée dans la cavité interne, le au moins un premier émetteur de lumière (4) étant dans le second état activé et le au moins un troisième émetteur de lumière (17) étant dans le premier état désactivé, et
d) générer une seconde surface holographique éclairée dans la cavité interne, le au moins un troisième émetteur de lumière (17) étant dans le second état activé et le au moins un premier émetteur de lumière (4) étant dans le premier état désactivé.

15. Dispositif d'éclairage (1") pour un véhicule selon la revendication 14, dans lequel la seconde unité pour générer un hologramme comprend en outre un second film sombre partiellement transparent superposé sur la seconde feuille holographique (18), la seconde feuille holographique (18) étant agencée entre le au moins un troisième émetteur (17) et le film sombre partiellement transparent.
